# EUROPEAN PATENT SPECIFICATION

(11) **EP 0 656 913 B1**
(45) Date of publication and mention of the grant of the patent: **11.12.1996**
(21) Application number: 93919769.5
(22) Date of filing: 23.08.1993
(51) Int. Cl.: C08G 12/12, C09J 161/24

(54) **AMINO RESIN AND METHOD FOR PRODUCING IT**
AMINOHARZ UND VERFAHREN ZUR HERSTELLUNG
RESINE AMINO ET SON PROCEDE DE PRODUCTION

(30) Priority: 25.08.1992 SE 9202443
(43) Date of publication of application: 14.06.1995
(73) Proprietor: Casco Products AB, 100 61 Stockholm (SE)
(72) Inventor: NILSSON, Birgit, S-132 31 Saltsjö-Boo (SE)
(74) Representative: Schöld, Zaid
(86) International application number: SE9300699
(87) International publication number: WO9404584

(56) References cited:
- DE-A- 3 346 679
- US-A- 3 996 178
- US-A- 5 017 641

## Description

The present invention relates to amino resins based on formaldehyde, urea and aliphatic dialdehyde for making adhesives for cellulose-based products. The invention also relates to a method for producing the amino resins and to the use thereof.

When gluing cellulose-based products, such as particle boards, fibreboards and details of solid wood, use is generally made of adhesives based on amino resins, primarily urea-formaldehyde resins. A well-known problem of these adhesives is the emission of free formaldehyde, both from the adhesives when they are produced and in their use, and from the glued products. One way of reducing the formaldehyde emission from amino resins is to reduce the molar ratio of formaldehyde/urea (F/U) as far as possible. A reduction of the F/U ratio in conventional urea-formaldehyde resins however results in a shortening of the shelf life of the adhesive and in a deterioration of its reactivity. To shorten the press times of the adhesives, the amount of hardener is generally increased, which also shortens the pot life of the adhesive mixture.

Different ways of extending the shelf life of urea-formaldehyde resins have been suggested. Thus, for example, it is possible to extend the shelf life by inserting SO₃²⁻ groups in the resin by a reaction with Na₂SO₃, NaHSO₃. This, however, adversely affects the press time and the strength of the glue line. Co-condensation with melamine and other triazines extends the shelf life without reducing the water resistance, but also extends the curing time.

Consequently, it is an object of the present invention to produce urea-formaldehyde resins with a low formaldehyde emission and good storage stability. It is a further object of the invention to produce a resin having an extended pot life after the addition of the hardener.

These objects of the invention are thus achieved, as recited in the claims, by means of a method in which amino resins are produced from formaldehyde, urea and dialdehyde. In the method, formaldehyde, aliphatic dialdehyde and urea are condensed in two or more stages, such that in stage
(1) the molar ratio of formaldehyde to urea is 2.6-5.0/l and pH 3.5-6.5 and the condensation temperature 70-100°C, and the amount of dialdehyde is 0.01-0.06 moles per mole of formaldehyde, and condensation takes place in the presence of 0.01-0.10 moles of ammonia, hexamine, ammonium salt, aliphatic amine or diamine per mole of urea, and in stage
(2) and optionally the following stages, the molar ratio of formaldehyde to urea is reduced to 2.4-1.5/l by adding urea. The invention also comprises amino resins produced by means of the method. The amino resins are used as adhesives for cellulose-based products.

It has surprisingly been found that condensation of urea and formaldehyde in the presence of small amounts of an aliphatic dialdehyde and an amine compound has made it possible to produce a urea-formaldehyde resin with low formaldehyde emission but with a long shelf life and a long pot life.

It is known to use dialdehydes, such as glyoxal, in the production of textile-finishing agents based on urea-formaldehyde condensate, e.g. from EP 171,530. However, it was unexpected that the use of a combination of a dialdehyde and an amine compound in urea-formaldehyde condensation would yield resins that can be used for making wood glue having improved properties.

The aliphatic dialdehyde used in the method according to the invention preferably is a lower aliphatic dialdehyde, such as glyoxal, succinaldehyde, glutaraldehyde, where glyoxal is the most preferred aldehyde.

The amine compound to be used during condensation is one of the compounds ammonia, hexamine, ammonium salt, aliphatic amine or diamine.

Condensation according to the method of the invention takes place in at least two stages. It is then essential that both the dialdehyde and the amine compound are involved in the first condensation stage. Thus, the compounds can be added before or during the first condensation stage. The dialdehyde is added in an amount of 0.01-0.06 moles per mole of formaldehyde, preferable 0.03-0.05 moles, most preferred 0.04-0.05 moles. The amine is added in an amount of 0.01-0.10 moles of amine per mole of urea, preferably 0.03-0.08 moles, most preferred 0.04-0.06 moles.

The molar ratio of formaldehyde to urea should be, during the first condensation stage, in the range of 2.6-5.0/l, preferably 2.6-3.0/l. The urea can be added batchwise or continuously. The condensation is conducted at a temperature of 70-100°C, preferably 70-90°C and at a pH of 3.5-6.5, preferably 3.5-4.5. The resin is condensed to a viscosity of 100-1000 mPa.s, measured at 25°C.

In the next and optionally further stages, condensation is allowed to proceed, the ratio of formaldehyde/ urea being reduced to 2.4-1.5/l, preferably 2.2-1.6/l, by the addition of urea. The urea can be added batchwise or continuously, in solid form or in the form of an aqueous solution. The condensation temperature is 50-100°C and pH 3.5-7. The resin is allowed to condense to a viscosity of 100-1000 mPa.s, measured at 25°C. Then, condensation is interrupted by raising the pH to 7.0-9.0, and further urea can be added to a molar ratio of formaldehyde/ urea of 2.0-1.0. The resin is evaporated to a dry matter content of about 60-75% by weight and a viscosity of 150-5000 mPa.s.

The invention also comprises an amino resin produced according to the method. When glyoxal is used as dialdehyde, the inventive method will yield a resin which per mole of urea contains 0.025-0.13 moles of dihydroxyethylene urea, N-methyloldihydroxyethylene urea, N,N-dihydroxyethylene urea, or oligomers thereof or reaction products of one of these substances with urea, monomethylol urea, dimethylol urea, trimethylol urea or oligomers thereof, and 0.01-0.10 moles of a triazinon or reaction products of triazinon with urea, mono-, di- or trimethylol urea or oligomers thereof, where the triazinon consists of compounds of the formula: 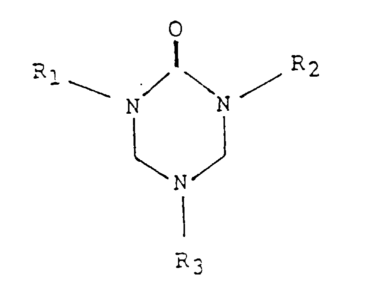 wherein R₁, R₂ = H, CH₂OH; R₃ = H, CH₃, C₂H₅, C₃H₇. The presence of these compounds in the resin can be shown by ¹³C-NMR.

The amino resin produced by the method according to the invention is used as adhesive, primarily for gluing cellulose-based products, such as particle boards, fibreboards or solid wood.

The amino resin according to the invention can be used with or without filler. The filler may be a conventional filler, such as different types of flour or starch, cellulose powder, and amorphous silica. The amino resin is cured by adding acid hardeners, such as ammonium chloride, ammonium sulphate, aluminium sulphate or with hardener compositions according to SE Patent Application 9201731-8, such as ethylenediamine hydrochloride or mixtures thereof. Also organic or inorganic acids can be used. Generally, the hardener salts or acids are dosed in an amount of 0.2-10%.

The invention will now be described by the following Examples where parts and percentages are parts by weight and per cent by weight, unless otherwise stated.
Two test series were run, one with glyoxal as dialdehyde and one with glutaraldehyde as dialdehyde. Ammonia was used as amine compound. In both test series, comparative tests were conducted where the amine compound was excluded. Test series 1 was run according to Example 1 below and test series 2 according to Example 2 below:

### Example 1

1140 g (19 mole) of 50% formalin, 72.5 g (0.5 mole) of 40% glyoxal, 54.4 g (0.8 mole) of 25% ammonia, and 444 g (7.4 mole) of urea were heated to boiling, the pH was allowed to drop to 4.0, and the resin was condensed to a viscosity of 300 mPa.s. pH was raised to 8.0, whereupon another 156 g (2.6 mole) of urea was added. Condensation was allowed to proceed at pH 5.0 to a viscosity of 300 mPa.s. pH is raised to about 8.5, and another 200 g (3.3 mole) of urea was added. The resin was thereafter vacuum-distilled until a dry matter content of 65-75% was obtained.

### Example 2

1140 g (19 mole) of 50% formalin, 100 g (0.5 mole) of 50% glutaraldehyde, 54.4 g (0.8 mole) of 25% ammonia, and 444 g (7.4 mole) of urea were heated to boiling. pH was adjusted to 4.0-5.0, and the resin was condensed to a viscosity of 300 mPa.s. pH was raised to 8.0, whereupon another 156 g (2.6 mole) of urea was added. Condensation was allowed to proceed at pH 5.0 to a viscosity of 300 mPa.s. pH was raised to 8.5, and another 200 g (3.3 mole) of urea was added. The resin was thereafter vacuum-distilled until a dry matter content of 65-75% was obtained.

The resins according to the Examples in test series 1 and 2 were compared with two reference resins, one a conventional urea-formaldehyde resin (Ref. 1) and the other a urea-formaldehyde resin produced in the presence of an amine compound (Ref. 2). Resins having the following molar ratios were produced in test series 1, where E-15 corresponds exactly to the amounts stated in Example 1 above:
The ratio between formaldehyde, urea, glyoxal and ammonia is indicated as F/U/G/A.

| | F | U | G | A |
|---|---|---|---|---|
| Ref. 1 | 1.30 | 1 | - | - |
| E-11 | 1.18 | 1 | 0.06 | - |
| E-12 | 1.24 | 1 | 0.03 | - |
| E-13 | 1.27 | 1 | 0.015 | - |
| Ref. 2 | 1.50 | 1 | - | 0.006 |
| E-14 | 1.35 | 1 | 0.075 | 0.06 |
| E-15 | 1.43 | 1 | 0.04 | 0.06 |
| E-16 | 1.47 | 1 | 0.02 | 0.06 |

Resins having the following molar ratios were produced in test series 2, where E-23 corresponds exactly to the amounts stated in Example 2 above:

| | F | U | G | A |
|---|---|---|---|---|
| E-21 | 1.24 | 1 | 0.03 | - |
| E-22 | 1.27 | 1 | 0.015 | - |
| E-23 | 1.43 | 1 | 0.04 | 0.06 |
| E-24 | 1.47 | 1 | 0.02 | 0.06 |

The resins were compared with respect to the following properties:
Setting times at 50°C and 90°C. Measured with 2% ammonium chloride on wet resin.
Free formaldehyde in the resins. Measured with the sodium sulphite method.
Shelf life at 25°C = The time it takes for the viscosity to treble.
Pot life at 20°C = The time it takes before a resin-hardener mixture has attained a viscosity of 20,000 mPa.s. The hardener used consisted of two different hardener compositions: H1 whose active ingredients are ammonium chloride, aluminium sulphate and urea, and H2 where the hardening component is ethylenediamine hydrochloride.

### Results

| | T.S. % | Free HCHO | Shelf life 25°C | Setting 90°C | time 50°C | Pot life 20° Hardener | |
|---|---|---|---|---|---|---|---|
| | | | | | | H1 | H2 |
| Ref. 1 | 68 | 0.18 | 5w | 3' | 30' | 1h30' | |
| E-11 | 73 | 0.11 | 3w | 3'10" | 36'10" | 1h | |
| E-12 | 71.8 | 0.17 | 4w | 3'17" | 34'30" | 1h15' | |
| E-13 | 72.8 | 0.17 | 4w | 2'50" | 35'02" | 1h15' | |
| E-21 | 70.7 | 0.22 | 4w | 3'40" | 45'15" | | |
| E-22 | 71.6 | 0.17 | 4w | 3'17" | 38'36" | | |
| | | | | | | | |
| Ref. 2 | 70 | 0.18 | 8w | 3' | 30' | 3h | 45' |
| E-14 | 71.1 | 0.09 | 15w | 3'50" | 75' | >5h | 2h45' |
| E-15 | 71.2 | 0.13 | 10w | 3'05" | 40'15" | >5h | 1h45' |
| E-16 | 71.9 | 0.13 | 10w | 2'42" | 34'45" | >5h | 1h30' |
| E-23 | 67.3 | 0.19 | 12w | 4' | 66' | | |
| E-24 | 69.5 | 0.09 | 7w | 3'33" | 59'24" | | |

The formaldehyde emission from glued products was measured with a modified Roffael method on veneered particle boards. The hardener used consisted of hardeners H1, H2 as above, and of hardener H3 whose active ingredients are ammonium chloride, aluminium sulphate and urea. The hardener dosage was 20 g of hardener for 100 g of adhesive. 0.6-mm beech veneer was glued on both sides of a 10-mm particle board of El quality. The press temperature was 110°C, and the press time was adjusted to the setting time. The edges of the particle board were sealed with paraffin. A value below 40 mg of HCHO/m².day, measured with this method, corresponds to E1 quality.

### Roffael test

| Glue/Hardener | Press time | mg HCHO/m²·day | % of Ref. |
|---|---|---|---|
| Ref.1/H1 | 1' | 29.7 | 100 |
| E-11/H1 | 1'15" | 20.5 | 69 |
| E-12/H1 | 1' | 20.5 | 69 |
| | | | |
| Ref.2/H2 | 30" | 41.6 | 100 |
| E-14/H2 | 3' | 13.2 | 31.7 |
| E-15/H2 | 45" | 20.2 | 48.6 |
| E-16/H2 | 30" | 32.4 | 77.9 |
| | | | |
| Ref.2/H3 | 1'15" | 39 | 100 |
| Ref.2/H3 | 2' | 35 | 100 |
| E-23/H3 | 2' | 15 | 43 |
| E-24/H3 | 1'15" | 14 | 36 |

The quality of the glue line was evaluated by gluing beech wood according to British Standard (BS) 1204 close-contact
Press temperature: 110°C
Press time: 16 min for hardener H2, 8 min in other cases.
INT = storing in 20°C water for 24 h
MR = storing in 27°C water for 3 h
(x = mean value, s = standard value)

| Glue/Hardener | Dry MPa (Fibre%) | INT MPa (fibre%) | MR MPA |
|---|---|---|---|
| Ref.1/H1 | x 5.97 (75) | 5.52 (75) | 2.36 |
| | s 0.71 | 1.39 | 0.37 |
| Ref 2/H1 | x 5.76 (86) | 6.01 (83) | 4.63 |
| | s 0.91 | 0.58 | 0.57 |
| E-12/H1 | x 4.93 (44) | 4.00 (5) | 2.83 |
| | s 1.37 | 0.52 | 0.49 |
| E-13/H1 | x 5.57 (42) | 4.28 (10) | 1.99 |
| | s 1.37 | 0.72 | 0.44 |
| E-21/H1 | x 4.02 (8) | 3.40 (14) | 1.48 |
| | s 0.91 | 0.46 | 0.66 |
| E-22/H1 | x 5.75 (70) | 5.27 (41) | 2.94 |
| | s 0.26 | 1.08 | 0.60 |
| E-23/H2 | x 5.57 (60) | 3.78 (13) | 1.62 |
| | s 0.23 | 0.41 | 0.88 |
| E-24/H2 | x 5.28 (68) | 4.14 (9) | 2.19 |
| | s 0.21 | 1.18 | 1.23 |
| E-14/H2 | x 3.69 (4) | 2.41 (5) | 0.97 |
| | s 1.23 | 0.28 | 0.73 |
| E-15/H2 | x 4.38 (55) | 5.06 (39) | 2.30 |
| | s 1.97 | 0.71 | 0.10 |
| E-16/H2 | x 6.38 (87) | 5.78 (65) | 3.67 |
| | s 0.41 | 0.42 | 1.10 |
| | | | |
| Standard | | 5.32 | 2.08 |

From these results appears that the resins produced according to the present invention are equivalent as to formaldehyde emission and quality of glue line according to British standard. However, the resins according to the invention have considerably improved shelf life and considerably improved pot life.

## Claims

1. A method for producing amino resins based on formaldehyde, urea and dialdehyde, which are used as adhesive for cellulose-based products, **characterised** by condensing formaldehyde, aliphatic dialdehyde and urea in two or more stages, such that in stage
(1) the molar ratio of formaldehyde to urea is 2.6-5.0/1 and pH 3.5-6.5 and the condensation temperature 70-100°C, and the amount of dialdehyde is 0.01-0.06 moles per mole of formaldehyde, and condensation takes place in the presence of 0.01-0.10 moles of ammonia, hexamine, ammonium salt, alipathic amine or diamine per mole of urea, and in stage
(2) which is carried out at pH 3.5-7.0, the molar ratio of formaldehyde to urea is reduced to 2.4-1.5/1 by the addition of urea and that in an optional following stage when the condensation has been interrupted by raising the pH to 7.0-9.0, additional urea is added to a molar ratio of formaldehyde to urea of 2.0-1.0.

2. A method as claimed in claim 1, **characterised** in that the dialdehyde is glyoxal.

3. A method as claimed in claim 1, **characterised** in that the dialdehyde is glutaraldehyde.

4. An amino resin based on formaldehyde, urea and aliphatic dialdehyde for producing an adhesive for cellulose-based products by condensing the formaldehyde, the aliphatic dialdehyde and the urea in two or more stages, such that in stage
(1) the molar ratio of formaldehyde to urea is 2.6-5.0/1 and pH 3.5-6.5 and the condensation temperature 70-100°C, and the amount of dialdehyde is 0.01-0.06 moles per mole of formaldehyde, and condensation takes place in the presence of 0.01-0.10 moles of ammonia, hexamine, ammonium salt, alipathic amine or diamine per mole of urea, and in stage
(2) which is carried out at pH 3.5-7.0, the molar ratio of formaldehyde to urea is reduced to 2.4-1.5/1 by the addition of urea and that in an optional following stage when the condensation has been interrupted by raising the pH to 7.0-9.0, additional urea is added to a molar ratio of formaldehyde to urea of 2.0-1.0.

5. An amino resin as claimed in claim 4, **characterised** in that the dialdehyde is glyoxal.

6. An amino resin as claimed in claim 4, **characterised** in that the dialdehyde is glutaraldehyde.

7. An amino resin as claimed in claim 5, **characterised** in that it contains
(1) 0.025-0.13 moles, per mole of urea, of dihydroxyethylene urea, N-methyloldihydroxyethylene urea, N,N-dihydroxyethylene urea, or oligomers thereof or reaction products of one of said substances with urea, monomethylol urea, dimethylol urea, trimethylol urea or oligomers thereof,
(2) 0.01-0.10 moles of a triazinon or reaction products of triazinon with urea, mono-, di- or trimethylol urea or oligomers thereof, where the triazinon consists of compounds of the formula 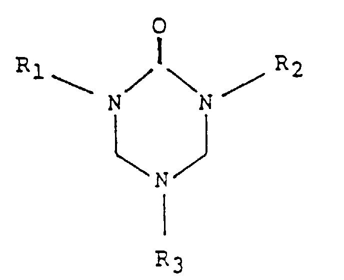 wherein R₁, R₂ = H, CH₂OH; R₃ = H, CH₃, C₂H₅, C₃H₇.

8. The use of an amino resin as claimed in any one of claims 4-7 as an adhesive for cellulose-based products, such as particle boards, fibreboards and solid wood.

## Patentansprüche

1. Verfahren zur Herstellung von Aminoharzen auf der Basis von Formaldehyd, Harnstoff und Dialdehyd, die als Klebstoff für Produkte auf Cellulosebasis verwendet werden, gekennzeichnet durch die Kondensierung von Formaldehyd, aliphatischem Dialdehyd und Harnstoff in zwei oder mehr Schritten dergestalt, daß in Schritt
(1) das molare Verhältnis von Formaldehyd zu Harnstoff 2,6-5,0/l und der pH 3,5-6,5 beträgt und die Kondensationstemperatur 70-100°C beträgt, und die Menge an Dialdehyd 0,01-0,06 Mol pro Mol Formaldehyd ausmacht und die Kondensation in Gegenwart von 0,01 bis 0,10 Mol Ammoniak, Hexamin, Ammoniumsalz, aliphatisches Amin oder Diamin pro Mol Harnstoff stattfindet und in Schritt
(2) der bei einem pH von 3,5-7,0 durchgeführt wird, das molare Verhältnis von Formaldehyd zu Harnstoff durch die zugabe von Harnstoff auf 2,4-1,5/l reduziert ist, und daß in einem gegebenenfalls folgendem Schritt, wenn die Kondensation durch Erhöhung des pH auf 7,0-9,0 unterbrochen wurde, zusätzlicher Harnstoff zu einem Molverhältnis von Formaldehyd zu Harnstoff von 2,0-1,0 zugegeben wird.

2. Verfahren nach Anspruch 1, dadurch gekennzeichnet, daß der Dialdehyd Glyoxal ist.

3. Verfahren nach Anspruch 1, dadurch gekennzeichnet, daß der Dialdehyd Glutaraldehyd ist.

4. Aminoharz auf der Basis von Formaldehyd, Harnstoff und aliphatischem Dialdehyd zur Herstellung eines Klebstoffs für Produkte auf Cellulosebasis, durch Kondensierung von Formaldehyd, aliphatischem Dialdehyd und Harnstoff in zwei oder mehr Schritten dergestalt, daß in Schritt
(1) das molare Verhältnis von Formaldehyd zu Harnstoff 2,6-5,0/l beträgt und der pH 3,5-6,5 ist und die Kondensationstemperatur 70-100°C beträgt, und die Menge an Dialdehyd 0,01-0,06 Mol pro Mol Formaldehyd ausmacht und die Kondensation in Gegenwart von 0,01-0,10 Mol Ammoniak, Hexamin, Ammoniumsalz, aliphatischem Amin oder Diamin pro Mol Harnstoff stattfindet und in Schritt
(2) der bei einem pH von 3,5-7,0 durchgeführt wird, das molare Verhältnis von Formaldehyd zu Harnstoff durch die Zugabe von Harnstoff auf 2,4-1,5/l reduziert ist, und daß in einem gegebenenfalls folgendem Schritt, wenn die Kondensation durch Erhöhung des pH auf 7,0-9,0 unterbrochen wurde, zusätzlicher Harnstoff zu einem Molarverhältnis von Formaldehyd zu Harnstoff von 2,0-1,0 zugegeben wird.

5. Aminoharz nach Anspruch 4, dadurch gekennzeichnet, daß der Dialdehyd Glyoxal ist.

6. Aminoharz nach Anspruch 4, dadurch gekennzeichnet, daß der Dialdehyd Glutaraldehyd ist.

7. Aminoharz nach Anspruch 5, dadurch gekennzeichnet, daß es
(1) pro Mol Harnstoff 0,025-0,13 Mol Dihydroxyethylenharnatoff, N-Methyloldihydroxyethylenharnstoff, N,N-Dihydroxyethylenharnstoff oder Oligomere davon oder Reaktionsprodukte von einem dieser Substanzen mit Harnstoff, Monomethylolharnstoff, Dimethylolharnstoff, Trimethylolharnstoff oder Oligomeren davon,
(2) 0,01-0,10 Mol eines Triazinons oder Reaktionsprodukte von Triazinon mit Harnstoff, Mono-, Di- oder Trimethylolharnstoff oder Oligomeren davon enthält, wobei das Triazinon aus Verbindungen der Formel 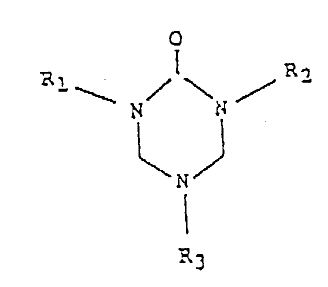 besteht, wobei R₁, R₂ = Wasserstoff, CH₂OH; R₃ = Wasserstoff, CH₃, C₂H₅, C₃H₇ ist.

8. Verwendung eines Aminoharzes nach einem der Ansprüche 4 bis 7 als Klebstoff für Produkte auf Cellulosebasis, wie Spanplatten, Faserplatten und festes Holz.

## Revendications

1. Procédé de production de résines aminées à base de formaldéhyde, d'urée et de dialdéhyde, que l'on utilise comme adhésif pour des produits à base de cellulose, caractérisé en ce qu'on condense le formaldéhyde, un dialdéhyde aliphatique et l'urée en deux ou plus de deux étapes, de sorte que dans l'étape
(1) le rapport molaire du formaldéhyde à l'urée vaille 2,6- 5,0 /l et le pH soit compris entre 3,5 et 6,5, et la température de condensation soit comprise entre 70 et 100°C, et la quantité de dialdéhyde soit comprise entre 0,01 et 0,06 mole par mole de formaldéhyde, et la condensation a lieu en présence de 0,01 à 0,10 mole d'ammoniac, d'hexamine, de sel d'ammonium, d'amine aliphatique ou de diamine par mole d'urée, et dans l'étape
(2) que l'on effectue à un pH compris entre 3,5 et 7, le rapport molaire du formaldéhyde à l'urée soit réduit à 2,4-1,5/l en ajoutant de l'urée, et de sorte que dans une étape suivante éventuelle, quand la condensation a été interrompue en élevant le pH à une valeur de 7,0 à 9,0, on ajoute de l'urée supplémentaire jusqu'à obtenir un rapport molaire de formaldéhyde à l'urée compris entre 2,0 et 1,0.

2. Procédé conforme à la revendication 1, caractérisé en ce que le dialdéhyde est le glyoxal.

3. Procédé conforme à la revendication 1, caractérisé en ce que le dialdéhyde est le glutaraldéhyde.

4. Résine aminée à base de formaldéhyde, d'urée et de dialdéhyde aliphatique afin de produire un adhésif pour des produits à base de cellulose en condensant le formaldéhyde, le dialdéhyde aliphatique et l'urée en deux ou plus de deux étapes, de sorte que dans l'étape
(1) le rapport molaire du formaldéhyde à l'urée vaille 2,6-5,0/l et le pH soit compris entre 3,5 et 6,5, et la température de condensation soit comprise entre 70 et 100° C, et la quantité de dialdéhyde vaille de 0,01 à 0,06 mole par mole de formaldéhyde, et la condensation a lieu en présence de 0,01 à 0,10 mole d'ammoniac, d'hexamine, de sel d'ammonium, d'amine aliphatique ou de diamine par mole d'urée, et dans l'étape
(2) que l'on effectue à un pH compris entre 3,5 et 7,0, le rapport molaire du formaldéhyde à l'urée soit réduit à 2,4-1,5/l en ajoutant de l'urée, et de sorte que dans une étape suivante éventuelle, quand la condensation a été interrompue en élevant le pH à une valeur de 7,0 à 9,0, on ajoute de l'urée supplémentaire jusqu'à obtenir un rapport molaire de formaldéhyde à l'urée de 2,0 à 1,0.

5. Résine aminée conforme à la revendication 4, caractérisée en ce que le dialdéhyde est le glyoxal.

6. Résine aminée conforme à la revendication 4, caractérisée en ce que le dialdéhyde est le glutaraldéhyde.

7. Résine aminée conforme à la revendication 5, caractérisée en ce qu'elle contient
(1) de 0,025 à 0,13 mole, par mole d'urée, de dihydoxyéthylène-urée, de N-méthyloldihydroxyéthylèneurée, de N,N-dihydroxyéthyléneurée ou d'oligomères de ces derniers, ou des produits réactionnels de l'une desdites substances avec l'urée, le monométhylolurée, le diméthylolurée, le triméthylolurée ou des oligomères de ces derniers,
(2) de 0,01 à 0,10 mole d'une triazinone ou des produits réactionnels d'une triazinone avec de l'urée, du monométhylolurée, diméthylolurée ou triméthylolurée ou des oligomères de ces derniers, où la triazinone consiste en des composés de formule : 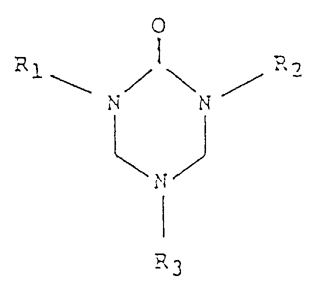 dans laquelle R₁, R₂ = H, CH₂OH ; R₃ = H, CH₃, C₂H₅, C₃-H₇.

8. Utilisation d'une résine aminée conforme à l'une quelconque des revendications 4 à 7, en tant qu'adhésif pour des produits à base de cellulose, comme des panneaux de particule, des panneaux de fibres et du bois massif.
